# EUROPEAN PATENT SPECIFICATION

(11) **EP 0 721 008 B1**
(45) Date of publication and mention of the grant of the patent: **14.06.2000**
(21) Application number: 95309195.6
(22) Date of filing: 18.12.1995
(51) Int. Cl.: C09K 11/80, C09K 11/78, C04B 35/443, C04B 35/01, C30B 29/20, C30B 29/22

(54) **Quantum splitting oxide phosphors and method of making same**
Quantum-Teilungs-Oxidphosphoren und Verfahren zur Herstellung desselben
Matériaux luminescents à base d'oxyde à division quantique et procédé pour les fabriquer

(30) Priority: 03.01.1995 US 367634; 03.01.1995 US 367637
(43) Date of publication of application: 10.07.1996
(73) Proprietor: GENERAL ELECTRIC COMPANY, Schenectady, NY 12345 (US)
(72) Inventor: Srivastava, Alok Mani, Schenectady, New York 12308 (US); Beers, William Winder, Chesterland, Ohio 44026 (US)
(74) Representative: Szary, Anne Catherine, Dr.

(56) References cited:
- EP-A- 0 451 001
- EP-A- 0 603 715
- WO-A-86/03768
- JOURNAL OF SOLID STATE CHEMISTRY, OCT. 1980, USA, vol. 34, no. 3, ISSN 0022-4596, pages 271-277, SAUBAT B ET AL 'Synthesis and structural study of the new rare earth magnesium borates LnMgB/sub 5/O/sub 10/ (Ln=La,...,Er)'

## Description

### Field Of The Invention

This invention relates generally to new oxide materials that have one application as a phosphor. More specifically, it comprises oxide phosphors doped with Pr³⁺ that exhibits quantum splitting when irradiated with VUV (Vacuum Ultra-Violet) radiation. Most specifically, in a first embodiment it is a composition of matter of the form La_{I-X}Pr_{X}MgB₅O₁₀, where 0<X≤0.20; and a method of making this oxide, and in second embodiment it is a composition of matter of the form Sr_{X}Pr_{1-X}Al_{12-X}Mg_{X}O_{I9}, where 0<X≤0.20, and a method of making this oxide.

### Background of the Invention

The conversion of a single ultraviolet photon into two visible photons with the result that the quantum efficiency of luminescence exceeds unity is termed quantum splitting. Quantum splitting materials are very desirable for use as phosphors for lighting applications, such as fluorescent lamps. A suitable quantum splitting material can in principle produce a significantly brighter light source. Quantum splitting has been demonstrated previously in fluoride-base materials. A material comprising 0.1% Pr³⁺ in a matrix of YF₃ has been shown to generate more than one visible photon for every absorbed UV photon when excited with 185nm radiation. The measured quantum efficiency of this material was 145%±15%, and thus greatly exceeded unity. The critical conditions that yield quantum splitting by the Pr³⁺ ion have only been achieved in fluoride-based materials. However, fluoride-base compounds do not have sufficient stability to permit their utilization as a phosphor in fluorescent lamps, because they are known to react with the Hg vapor that is used in such lamps to provide the UV radiation and form a material that does not exhibit quantum splitting.

Therefore, it is desirable to develop materials that exhibit quantum splitting behavior, but that are also stable and suitable for use in current technology lamps (e.g. Hg-containing fluorescent lamps), such as metal oxides.

### Summary of the invention

According to a first aspect of the invention, there is provided an oxide material having an atomic ratio, comprising: La_{1-X}Pr_{X}MgB₅O₁₀; where O<X<0.20.

According to a second aspect of the invention, there is provided use of an oxide material having an atomic ratio, comprising: Sr_{1-X}Pr_{X}Al_{12-X}Mg_{X}O₁₉;
where O<X<0.20 as a phosphor which shows quantum splitting behavior when iradicated with VUV.

According to a third aspect of the invention, there is provided the method of claim 6, further comprising the step of washing the material in water to remove excess H₃BO₃.

According to a fourth aspect of the invention, there is provided a lamp comprising an evacuated housing, a VUV radiation source located within the housing, and a phosphor that is located within the housing and adapted to be excited by the VUV radiation source, said phosphor comprising a boron oxide compound containing lanthanum, praseodymium, and magnesium in an atomic ratio La₁₋ₓPrₓMgB₅O₁₀ where 0<X<0.20, which phosphor exhibits quantum splitting when excited by VUV radiation from the VUV radiation source.

According to a fifth aspect of the invention, there is provided a lamp comprising an evacuated housing, a VUV radiation source located within the housing, and a phosphor that is located within the housing and adapted to be excited by the VUV radiation source, said phosphor comprising an oxide of aluminum, strontium, praseodymium, and magnesium in an atomic ratio Sr₁₋ₓPrₓA1₁₂₋ₓMgₓO₁₉; where 0,x,0.20, which phosphor exhibits quantum splitting when excited by VUV radiation.

Thus the invention includes an oxide phosphor doped with Pr³⁺ that exhibits quantum splitting when irradiated with VUV radiation. It is also expected to feature the desired characteristic of being chemically stable in the presence of an Hg vapor discharge.

In a first embodiment this invention comprises a composition of matter in the form of an oxide material having an atomic ratio, comprising:
La₁₋XPrxMgB₅O₁₀; where O<X<0.20.

The first embodiment of this invention may also be described as an oxide of boron, lanthanum, praseodymium, and magnesium that exhibits quantum splitting when excited by VUV radiation.

The invention also may be described as a method of making La_{I-X}PrₓMgB₅O₁₀ material, where O<X<0.20, comprising the steps of: selecting a desired value of X so as to define a desired composition; forming a substantially homogeneous mixture from a quantity of each of the compounds La₂(CO₃)₃.8H₂O,Pr₆O_{II},MgO and H₃BO₃ that is sufficient to satisfy a stoichiometric requirement of the desired composition; and firing the mixture in a non-oxidizing atmosphere at a temperature and for a time sufficient to sinter the material and maintain the Pr state as Pr3⁺.

In a second embodiment, this invention comprises the use of a composition of matter in the form of an oxide material having an atomic ratio, comprising:
Sr₁₋ₓPr_{X}Al_{12-X}Mg_{X}O₁₉; where O<X<0.20, as a phosphor which exhibits quantum splitting when excited by VUV radiation.

The invention also may be described as a method of making Sr_{1-X}Pr_{X}Al_{12-X}Mg_{X}O₁₉ material, where O<X<0.20, comprising the steps of: selecting a desired value of X so as to define a desired composition; forming a substantially homogeneous mixture from a quantity of each of the compounds SrCO₃,Pr₆O_{II},Al(OH)₃ and MgO that is sufficient to satisfy a stoichiometric requirement of the desired composition; and firing the mixture in a non-oxidizing atmosphere at a temperature and for a time sufficient to sinter the material and maintain the Pr state as Pr3⁺.

### Brief Description of the Drawings

The invention will now be described in greater detail by way of example, with reference to the file drawings, in which:-

Figure 1 is a plot of measured values of emission intensity as a function of wavelength for a phosphor of the first embodiment of the present invention.

Figure 2 is a plot of measured values of emission intensity as a function of wavelength for a phosphor of the second embodiment of the present invention.

Figure 3 is a schematic illustration of a lamp incorporating either phosphor of the present invention.

### Detailed Description of the Invention

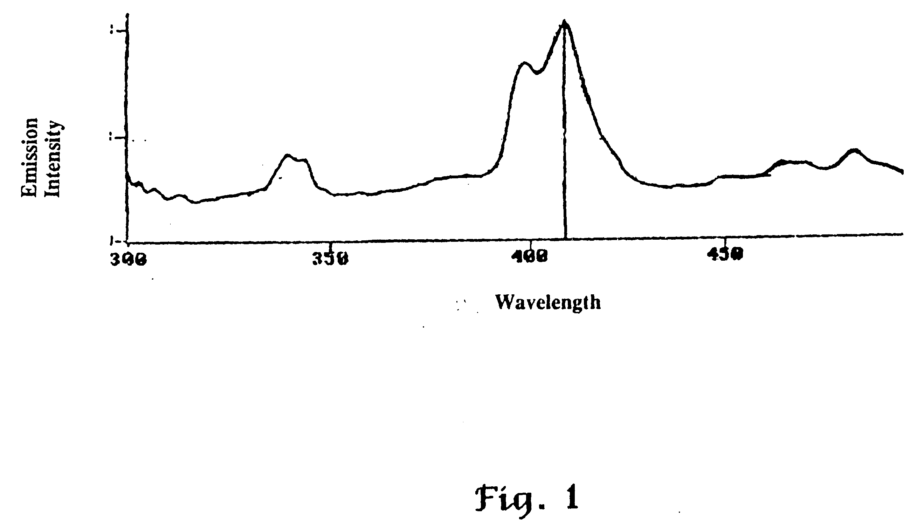

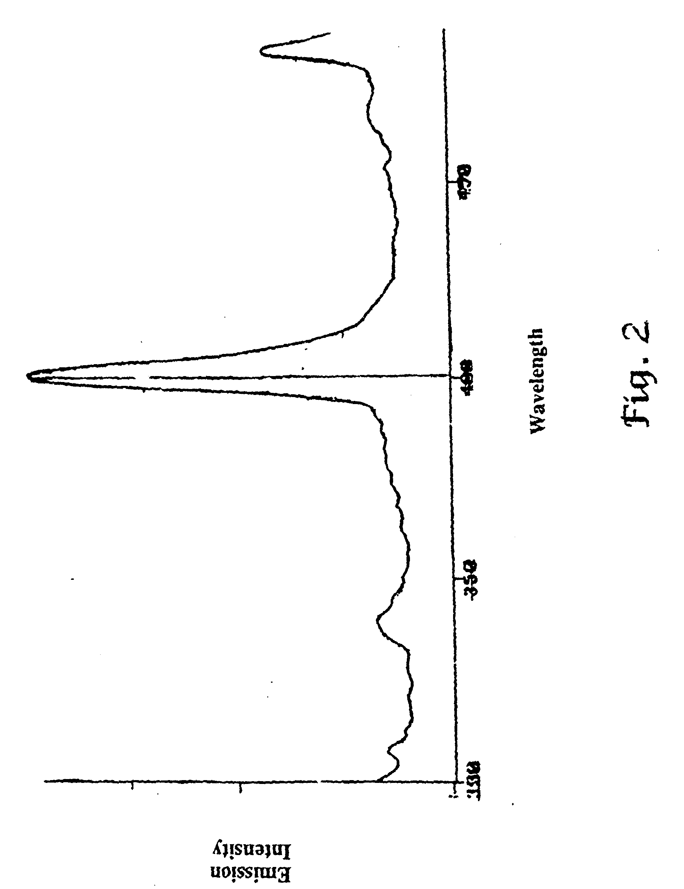

In its first embodiment, this invention relates generally to a new oxide material comprising a complex oxide of boron, lanthanum, praseodymium and magnesium. In its second embodiment, this invention relates generally to a new oxide material comprising a complex oxide of aluminum, strontium, magnesium and praseodymium. Either material may be used as a phosphor, and is of particular interest because it has been observed to exhibit quantum splitting when it is excited by UV radiation in a VUV radiation environment. This material was empirically determined to be a quantum splitting material based upon observation of a characteristic peak or shift in the emission spectra of the material at 400nm when excited by VUV radiation, as shown in Figure 1 or Figure 2, respectively. This shift at 400nm is known to be a characteristic of quantum splitting materials, and examination of the intensity/wavelength emission spectra provides a convenient way of testing phosphors for quantum splitting behavior, as opposed to using the more time consuming quantum efficiency measurements for this purpose.

Review of intensity/wavelength emission spectra for a number of complex oxides of boron, lanthanum, praseodymium and magnesium has led to the empirical determination that quantum splitting is particularly observed in oxides of the first embodiment of the present invention over the range of compositions represented by the atomic ratios:
La_{1-X}Pr_{X}MgB₅O₁₀; where 0<X≤0.20.

Review of intensity/wavelength emission spectra for a number of complex oxides of aluminum, strontium, magnesium and praseodymium has led to the empirical determination that quantum splitting is particularly observed in oxides of the second embodiment of the present invention over the range of compositions represented by the atomic ratios:
Sr_{1-X}Pr_{X}Al_{12-X}Mg_{X}O₁₉ ; where 0<X≤0.20,

Without limitation, the quantum splitting behavior is attributed to the UV excitation of the Pr³⁺ ion within the oxide lattice. Therefore, oxides of the present invention should be processed so as to maintain Pr as a Pr³⁺ ion within the oxide lattice.

The quantum splitting oxide, Sr_{1-X}Pr_{X}Al_{12-X}Mg_{X}O₁₉, where 0<X≤0.20, has been incorporated into a VUV fixture containing Hg, which was excited to serve as the UV source. This oxide continued to exhibit quantum splitting, even after about 100 hours of exposure to the Hg. Therefore, oxides of the first embodiment of the present invention are also expected to maintain quantum splitting in an Hg vapor environment.

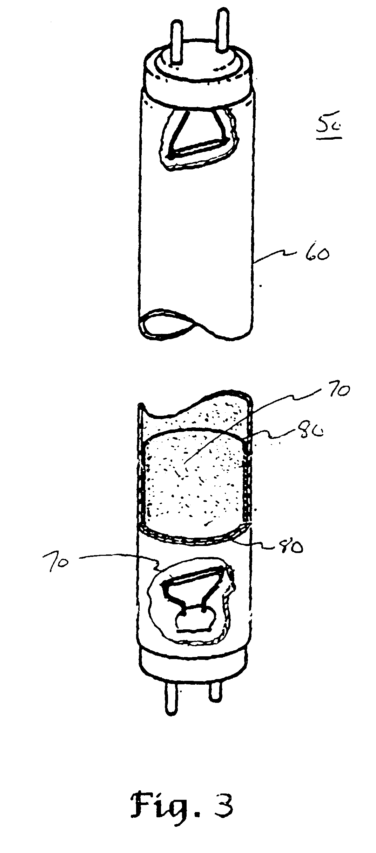

The oxides of the present invention characterized by quantum splitting behavior in VUV radiation and stability with regard to an Hg discharge environment may be utilized as a phosphor in a fluorescent lamp. Referring to Figure 3, lamp 50 comprises an evacuated housing means 60, a VUV radiation source 70 located within the housing means 60, and a phosphor 80 that is located within the housing and adapted to be excited by the VUV radiation source, said phosphor 80 comprising an oxide of boron, lanthanum, praseodymium, and magnesium that exhibits quantum splitting when excited by VUV radiation, or an oxide of aluminum, strontium, praseodymium, and magnesium that exhibits quantum splitting when excited by VUV radiation. In a preferred embodiment, lamp 50 is a fluorescent lamp and evacuated housing means 60 comprises an evacuated glass tube. The VUV radiation source 70 is a combination of Hg and an excitation means located within the glass tube that may be used to create an Hg vapor discharge to excite phosphor 80.

### Example 1

A sample of the oxide of the present invention designed to yield 50 grams of the final material was prepared by combining the following:

| | |
|---|---|
| La₂(CO₃)₃·8H₂O | 37.78 |
| Pr₆O₁₁ | 1.1278 |
| MgO | 5.34 |
| H₃BO₃ | 41.4 g |

The starting materials were blended using a ball mill with ZrO₂ milling media. The blended materials were then fired in forming gas (1%H₂-99%N₂) to avoid the oxidation of Pr to Pr⁴⁺, and maintain the Pr in the lattice as Pr³⁺ state. The final composition of the material was La_{0.95}Pr_{0.05}MgB₅O₁₀.

A general method for making the oxides of the first embodiment comprises selecting a desired value of X so as to define a desired composition; forming a substantially homogeneous mixture from a quantity of each of the compounds La₂(CO₃)₃·8H₂O,Pr₆O₁₁,MgO and H₃BO₃ that is sufficient to satisfy a stoichiometric requirement of the desired composition; and firing the mixture in a non-oxidizing atmosphere at a temperature and for a time sufficient to sinter the material and maintain the Pr state as Pr³⁺.

The material was irradiated with 185nm radiation in a VUV instrument. The resulting emission was monitored from 300-500nm, and is shown as Figure 1.

### Example 2

A sample of the oxide of the present invention designed to yield 50 grams of the final material was prepared by combining the following:

| | |
|---|---|
| SrCO₃ | 9.77 g |
| Pr₆O₁₁ | 0.59 g |
| Al(OH)₃ | 64.94 g |
| MgO | 0.14 g |

The starting materials were blended using a ball mill with ZrO₂ milling media. The blended materials were then fired in air in an available furnace for 5 hours at 1,500°C to sinter the material, however, firing in air is generally undesirable because it tends to oxidize the Pr to Pr⁴⁺, rather than Pr³⁺. Therefore, in this example, the sintered sample was remilled and fired at 1,200°C for an additional 5 hours in forming gas (1%H₂-99%N₂) to reduce the Pr to Pr³⁺. The final composition of the material was
Sr_{0.95}Pr_{0.05}Al_{11.95}Mg_{0.05}O₁₉.

A general method for making the oxides of the second embodiment of the present invention comprises selecting 100 a desired value of X so as to define a desired composition; forming 110 a substantially homogeneous mixture from a quantity of each of the compounds SrCO₃,Pr₆O₁₁,Al(OH)₃ and MgO that is sufficient to satisfy a stoichiometric requirement of the desired composition; and firing the mixture in a non-oxidizing atmosphere at a temperature and for a time sufficient to sinter the material and maintain the Pr state as Pr³⁺.

The material was irradiated with 185nm radiation in a VUV instrument. The resulting emission was monitored from 300-500nm, and is shown as Figure 2. In addition to the shift at 400nm, a shift was also observed in the visible spectrum at approximately 480nm.

## Claims

1. An oxide material having an atomic ratio, comprising:
La_{I-X}PrₓMgB₅O₁₀;
where O<X<0.20.

2. The ceramic oxide material of claim 1, wherein the ceramic oxide material exhibits quantum splitting behavior when excited by VUV radiation.

3. The ceramic oxide material of claim 2, wherein the VUV radiation results from an Hg vapor discharge in the presence of the ceramic oxide material.

4. Use of an oxide material having an atomic ratio, comprising:
Sr_{1-X}Pr_{X}Al_{12-X}MgₓO₁₉;
where O<X<0.20 as a phosphor which shows quantum splitting behavior when irradiated with VUV.

5. Use of an oxide material as claimed in claim 2, wherein the VUV radiation results from an Hg vapor discharge in the presence of the ceramic.

6. A method of making La_{I-X}PrₓMgB₅O₁₀ material, where O<X<0.20, comprising the steps of selecting a desired value of X so as to define a desired composition;
forming a substantially homogeneous mixture from a quantity of each of the compounds La₂(CO₃)₃.8H₂O,Pr₆O_{II},MgO and H₃BO₃ that is sufficient to satisfy a stoichiometric requirement of the desired composition; and
firing the mixture in a non-oxidizing atmosphere at a temperature and for a time sufficient to sinter the material and maintain the Pr state as Pr³⁺.

7. The method of claim 6, further comprising the step of washing the material in water to remove excess H₃BO₃.

8. A method of making Sr₁₋ₓPrXAl_{12-X}Mg_{X}O₁₉ material;
where O<X<0.20 comprising the steps of:
selecting a desired value of X so as to define a desired composition;
forming a substantially homogeneous mixture from a quantity of each of the compounds SrCO₃,Pr₆O_{II},Al(OH)₃ and MgO that is sufficient to satisfy a stoichiometric requirement of the desired composition; and
firing the mixture in a non-oxidizing atmosphere at a temperature and for a time sufficient to sinter the material and maintain the Pr state as Pr³⁺.

9. The method of claim 8, wherein the non-oxidizing atmosphere is a forming gas atmosphere.

10. A lamp comprising an evacuated housing, a VUV radiation source located within the housing, and a phosphor that is located within the housing and adapted to be excited by the VUV radiation source, said phosphor comprising a boron oxide compound containing lanthanum, praseodymium, and magnesium in an atomic ratio La₁₋ₓPrₓMgB₅O₁₀ where 0<X<0.20, which phosphor exhibits quantum splitting when excited by VUV radiation from the VUV radiation source.

11. A lamp comprising an evacuated housing, a VUV radiation source located within the housing, and a phosphor that is located within the housing and adapted to be excited by the VUV radiation source, said phosphor comprising an oxide of aluminum, strontium, praseodymium, and magnesium in an atomic ratio Sr₁₋ₓPrₓAl₁₂₋ₓMgₓO₁₉; where 0,x,0.20, which phosphor exhibits quantum splitting when excited by VUV radiation.

12. The lamp of claim 10 or 11, wherein the VUV radiation source is Hg that is adapted to be excited by an excitation means so as to create an Hg vapor discharge.

## Patentansprüche

1. Oxidmaterial mit einem Atomverhältnis, umfassend:
La₁₋ₓPrₓMgB₅O₁₀,
worin 0<x<0,20.

2. Keramikoxidmaterial nach Anspruch 1, das ein Quantenspaltungs-Verhalten zeigt, wenn es mit Vakuum-UV-Strahlung angeregt wird.

3. Keramikoxidmaterial nach Anspruch 2, worin die Vakuum-UV-Strahlung aus einer Quecksilberdampf-Entladung in Gegenwart des keramischen Oxidmaterials resultiert.

4. Verwendung eines Oxidmaterials mit einem Atomverhältnis, umfassend:
Sr₁₋ₓPrₓAℓ₁₂₋ₓMgₓO₁₉,
worin 0<x<0,20, als ein Leuchtstoff, der ein Quantenspalt-Verhalten zeigt, wenn er mit Vakuum-UV bestrahlt wird.

5. Verwendung eines Oxidmaterials nach Anspruch 2, worin die Vakuum-UV-Strahlung aus einer Quecksilberdampf-Entladung in Gegenwart der Keramik resultiert.

6. Verfahren zum Herstellen von La₁₋ₓPrₓMgB₅O₁₀-Material, worin 0<x<0,20, umfassend die Stufen des Auswählens eines erwünschten Wertes von x, um eine erwünschte Zusammensetzung zu definieren;
Bilden einer im Wesentlichen homogenen Mischung aus einer Menge jeder der Verbindungen La₂(CO₃)₃·8H₂O, Pr₆O₁₁, MgO und H₃BO₃, die zur Erfüllung einer stöchiometrischen Anforderung der erwünschten Zusammensetzung genügt, und
Glühen der Mischung in einer nicht oxidierenden Atmosphäre bei einer Temperatur und für eine Zeit, die genügen, um das Material zu sintern und den Pr-Zustand als Pr³⁺ beizubehalten.

7. Verfahren nach Anspruch 6, weiter umfassend die Stufe des Waschens des Materials in Wasser, um überschüssige H₃BO₃ zu entfernen.

8. Verfahren zum Herstellen von Sr₁₋ₓPrₓAℓ₁₂₋ₓMgₓO₁₉-Material,
worin 0<x<0,20,
umfassend die Stufen des Auswählens eines erwünschten Wertes von x, um eine erwünschte Zusammensetzung zu definieren,
Bilden einer im Wesentlichen homogenen Mischung aus einer Menge jeder der Verbindungen SrCO₃, Pr₆O₁₁, Al(OH)₃ und MgO, die genügt, um eine stöchiometrische Anforderung der erwünschten Zusammensetzung zu erfüllen, und
Glühen der Mischung in einer nicht oxidierenden Atmosphäre bei einer Temperatur und für eine Zeit, die genügen, das Material zu sintern und den Pr-Zustand als Pr³⁺ beizubehalten.

9. Verfahren nach Anspruch 8, worin die nicht oxidierende Atmosphäre eine Formgas-Atmosphäre ist.

10. Lampe, umfassend ein evakuiertes Gehäuse, eine Quelle für Vakuum-UV-Strahlung, die innerhalb des Gehäuses lokalisiert ist, und einen Leuchtstoff, der innerhalb des Gehäuses lokalisiert ist und zur Anregung durch die Vakuum-UV-Strahlungsquelle eingerichtet ist, wobei der Leuchtstoff eine Boroxid-Verbindung umfasst, die Lanthan, Praseodym und Magnesium in einem Atomverhältnis La₁₋ₓPrₓMgB₅O₁₀ enthält, worin 0<x<0,20, wobei dieser Leuchtstoff eine Quantenspaltung zeigt, wenn er mit Vakuum-UV-Strahlung aus der Vakuum-UV-Strahlungsquelle angeregt wird.

11. Lampe, umfassend ein evakuiertes Gehäuse, eine in dem Gehäuse angeordnete Quelle für Vakuum-UV-Strahlung und einen in dem Gehäuse angeordneten Leuchtstoff, der zur Anregung durch die Vakuum-UV-Strahlungsquelle eingerichtet ist, wobei der Leuchtstoff ein Oxid von Aluminium, Strontium, Praseodym und Magnesium in einem Atomverhältnis Sr₁₋ₓPrₓAℓ₁₂₋ₓMgₓO₁₉ umfasst, worin 0<x<0,20, wobei dieser Leuchtstoff eine Quantenspaltung zeigt, wenn er durch Vakuum-UV-Strahlung angeregt wird.

12. Lampe nach Anspruch 10 oder 11, worin die Vakuum-UV-Strahlungsquelle Hg ist, das zur Anregung durch eine Anregungseinrichtung vorgesehen ist, um eine Quecksilberdampf-Entladung zu erzeugen.

## Revendications

1. Matériau oxyde présentant des proportions atomiques reflétées par la formule :
La₁₋ₓPrₓMgB₅O₁₀
où 0 < x < 0,20.

2. Matériau oxyde céramique conforme à la revendication 1, lequel matériau oxyde céramique présente un comportement de division quantique lorsqu'il est excité par un rayonnement UV lointain.

3. Matériau oxyde céramique conforme à la revendication 2, pour lequel le rayonnement UV lointain résulte d'une décharge dans de la vapeur de mercure, en présence du matériau oxyde céramique.

4. Emploi d'un matériau oxyde présentant des proportions atomiques reflétées par la formule :
Sr₁₋ₓPrₓAl₁₂₋ₓMgₓO₁₉
où 0 < x < 0,20,
comme phosphor qui présente un comportement de division quantique lorsqu'il est excité par un rayonnement UV lointain.

5. Emploi d'un matériau oxyde céramique, conforme à la revendication 2, pour lequel le rayonnement UV lointain résulte d'une décharge dans de la vapeur de mercure, en présence du matériau oxyde céramique.

6. Procédé de préparation d'un matériau La₁₋ₓPrₓMgB₅O₁₀ où 0 < x < 0,20, qui comporte les étapes consistant :
- à choisir la valeur voulue pour x, afin de définir la composition voulue,
- à former un mélange pratiquement homogène à partir des composés La₂(CO₃)₃.8H₂O, Pr₆O₁₁, MgO et H₃BO₃, utilisés chacun en une quantité suffisante pour que soit respectée la stoechiométrie de la composition voulue ; et
- à calciner ce mélange sous atmosphère non oxydante, à une température et pendant un laps de temps suffisants pour fritter le matériau tout en maintenant le praséodyme à l'état Pr³⁺.

7. Procédé conforme à la revendication 6, qui comporte en outre une étape consistant à laver le matériau dans de l'eau, afin d'en éliminer l'excès d'H₃BO₃.

8. Procédé de préparation d'un matériau Sr₁₋ₓPrₓAl₁₂₋ₓMgₓO₁₉ où 0 < x < 0,20, qui comporte les étapes consistant :
- à choisir la valeur voulue pour x, afin de définir la composition voulue,
- à former un mélange pratiquement homogène à partir des composés SrCO₃, Pr₆O₁₁, Al(OH)₃ et MgO, utilisés chacun en une quantité suffisante pour que soit respectée la stoechiométrie de la composition voulue ; et
- à calciner ce mélange sous atmosphère non oxydante, à une température et pendant un laps de temps suffisants pour fritter le matériau tout en maintenant le praséodyme à l'état Pr³⁺.

9. Procédé conforme à la revendication 8, dans lequel l'atmosphère non oxydante est une atmosphère de gaz inerte protecteur.

10. Lampe comportant une enveloppe sous vide, une source de rayonnement UV lointain placée à l'intérieur de l'enveloppe, et un phosphor placé à l'intérieur de l'enveloppe et apte à être excité par le rayonnement UV lointain de la source, ledit phosphor comprenant un composé qui est un oxyde de bore contenant du lanthane, du praséodyme et du magnésium en des proportions atomiques reflétées par la formule La₁₋ₓPrₓMgB₅O₁₀ où 0 < x < 0,20, lequel phosphor présente un comportement de division quantique lorsqu'il est excité par le rayonnement UV lointain provenant de ladite source de rayonnement UV lointain.

11. Lampe comportant une enveloppe sous vide, une source de rayonnement UV lointain placée à l'intérieur de l'enveloppe, et un phosphor placé à l'intérieur de l'enveloppe et apte à être excité par le rayonnement UV lointain de la source, ledit phosphor comprenant un oxyde d'aluminium, de strontium, de praséodyme et de magnésium en des proportions atomiques reflétées par la formule Sr₁₋ₓPrₓAl₁₂₋ₓMgₓ-O₁₉ où 0 < x < 0,20, lequel phosphor présente un comportement de division quantique lorsqu'il est excité par un rayonnement UV lointain.

12. Lampe conforme à la revendication 10 ou 11, dans laquelle la source de rayonnement UV lointain est constituée par du mercure qui est adapté pour être excité par un moyen d'excitation de manière à ce que soit créée une décharge dans de la vapeur de mercure.
